# EUROPÄISCHE PATENTSCHRIFT

(11) **EP 2 461 662 B1**
(45) Veröffentlichungstag und Bekanntmachung des Hinweises auf die Patenterteilung: **03.09.2014**
(21) Anmeldenummer: 10732648.0
(22) Anmeldetag: 28.06.2010
(51) Int. Cl.: A01C 7/08

(54) **VERTEILER**
DISTRIBUTION HEAD
TÊTE DE DISTRIBUTION

(30) Priorität: 05.08.2009 DE 102009026332; 04.03.2010 DE 102010000629
(43) Veröffentlichungstag der Anmeldung: 13.06.2012
(73) Patentinhaber: Amazonen-Werke H. Dreyer GmbH & Co. KG, 49205 Hasbergen (DE)
(72) Erfinder: TISSEN, Reimer, Uwe, 26135 Oldenburg (DE); WILKEN, Martin, 26409 Wittmund (DE); BRÜGGEMANN, Klaus, 27777 Ganderkesee (DE)
(86) Internationale Anmeldenummer: PCT/EP2010/003926
(87) Internationale Veröffentlichungsnummer: WO 2011/015258

(56) Entgegenhaltungen:
- EP-A1- 0 748 580
- EP-A1- 1 342 400
- DE-U1- 29 705 999

## Beschreibung

Die Erfindung betrifft einen Verteiler für eine pneumatische Verteilmaschine gemäß des Oberbegriffes des Patentanspruches 1.

Ein derartiger Verteiler ist beispielsweise durch die DE 297 05 999 U1 bekannt geworden. Ein weiterer Verteiler ist durch die DE 102 10 010 B4 bekannt. Bei diesem Verteiler ist ein Absperrschieber vorgesehen, der die Form eines zum ringförmigen Verteilerraumes konzentrischen Zylinderabschnittes aufweist. Mittels dieses Absperrschiebers können gleichzeitig mehrere Eintrittsöffnungen von Verteilerleitungen abgesperrt werden, so dass in einfacher Weise die Arbeitsbreite reduziert wird. Vergleichsversuche haben nun ergeben, dass die Aufteilung des von der Zuführleitung zugeführten Materiales auf die nicht abgesperrten Leitungen, wenn der Absperrschieber in den Verteilerraum hineingeschoben ist und mehrere Eintrittsöffnungen von Absperrleitungen absperrt, die gleichmäßige Aufteilung auf die nicht abgesperrten Verteilerleitungen nicht gegeben ist.

Der Erfindung liegt die Aufgabe zugrunde, hier auf einfache Weise Abhilfe zu schaffen.

Die Erfindung stellt einen Verteiler nach Anspruch 1 bereit.

Der Absperrschieber weist die Form eines zum ringförmigen Verteilerraum nicht konzentrischen Zylinderabschnittes auf. Infolge dieser Maßnahmen lässt sich der Absperrschieber in einfacher Weise dahingehend optimieren, dass durch die Form des Absperrschiebers, die von der konzentrischen Ausgestaltung im Hinblick auf den Verteilerraum abweichend ist, eine Vergleichmäßigung der Aufteilung des zugeführten Materiales im Verteilerraum auf die nicht abgesperrten Leitungen erfolgt.

Eine vorteilhafte Ausgestaltung des Absperrschiebers zur Erreichung einer möglichst gleichmäßigen Aufteilung des von der Zuführungsleitung zugeführten Materials im Verteilerraum auf die nicht abgesperrten und somit weiter aktiven Eintrittsöffnungen der Verteilerleitungen lässt sich dadurch erreichen, dass der Absperrschieber in seinem der Zuführleitung unmittelbar benachbarten Bereich einen kreisförmigen Zylinderabschnitt aufweist, dass sich an den zylinderförmigen Abschnitt nicht kreisförmige Flächenabschnitte anschließen, die zumindest annähernd in eine ebene Fläche auslaufen.

Um in einfacher Weise, auch wenn der Absperrschieber einen Bereich des Verteilerraumes völlig absperrt, eine Abfuhr der zu viel zugeführter Förderluft durch die Zuführleitung bei einem einer Teilabsperrung des Verteilerraumes zu gewährleisten, ist vorgesehen, dass der Absperrschieber luftdurchlässig ausgebildet ist. Hierdurch ist es möglich, dass aufgrund der Luftdurchlässigkeit des Absperrschiebers die zu viel geförderte Förderluft durch den Absperrschieber entweichen kann.

Das Entweichen von Luft durch den Absperrschieber kann dadurch gewährleistet sein, dass der Absperrschieber aus einem luftdurchlässigen Material oder einem siebartigen Material besteht.

Damit keine auszubringenden Saatkörner durch den Absperrschieber entweichen können, ist vorgesehen, dass das aussiebartigen Material ein Sieb ist, dessen Maschenweite kleiner als das auszubringende körnige Material ist.

Um den Verteiler und den Absperrschieber an verschiedene auszubringende Materialien, wie beispielsweise Mais, Raps oder Getreide Gerste etc. anpassen zu können, ist vorgesehen, dass Absperrschieber mit verschiedenen großen Maschenweiten und/oder verschieden großer Luftdurchlässigkeit vorhanden und gegeneinander austauschbar sind.

Der Absperrschieber weist die Form eines zum ringförmigen Verteilerraum nicht konzentrischen Zylinderabschnittes auf, wobei der Absperrschieber in seinem der Zuführleitung unmittelbar benachbarten Bereich einen Schieberabschnitt, der einen der Kreiskontur der Zuführleitung und des ringförmigen Verteilerraumes ähnlichen Krümmungsverlauf aufweist, besitzt, wobei sich an diesem mittleren Bereich des Absperrschiebers jeweils auf jeder Seite ein eine entgegensetzte Krümmung aufweisender Schieberabschnitt anschließt.

Infolge dieser Maßnahmen lässt sich der Absperrschieber in einfacher Weise dahingehend optimieren, dass durch die Form des Absperrschiebers, die von der konzentrischen Ausgestaltung im Hinblick auf den Verteilerraum abweichend ist, eine Vergleichmäßigung der Aufteilung des zugeführten Materiales im Verteilerraum auf die nicht abgesperrten Leitungen erfolgt. Durch den versetzten und oder sich veränderten Krümmungsverlauf der äußeren Abschnitte des Absperrchiebers gegenüber dem mittleren Bereich des Absperrschiebers wird eine verbesserte Gleichmäßigkeit des über die Zuführleitung in den Verteilerraum zugeführten Saatgut auf die einzelnen nicht abgesperrten Verteilerleitungen erreicht.

Versuche haben gezeigt, dass diese ausreichend gut gleichmäßige Aufteilung des Saatgutes auf die nicht abgesperrten Leitungen in einer Ausführungsform sich dadurch erreichen lässt, dass der Absperrschieber in seinem der Zuführleitung unmittelbar benachbarten Bereich einen zumindest annähernd ringförmigen Zylinderabschnitt, der sich über einen Bereich zwischen 70° und 120°, vorzugsweise etwa 90° erstreckt und zumindest annähernd konzentrisch zu der Kreiskontur der Zuführleitung des ringförmigen Verteilerraumes verläuft, aufweist, dass sich an diesem mittleren Bereich des Absperrschiebers sich mit zu dem mittleren als Kreisabschnitt ausgebildeten Bereich jeweils auf jeder Seite ein eine entgegensetzte Krümmung aufweisender Schieberabschnitt anschließt.

Die gleichmäßige Aufteilung des Saatgutes im Verteilerkopf bei Absperrung eines Teiles der Verteilerleitungen auf nur einen Teil der Verteilerleitungen lässt sich dadurch erreichen, dass der Absperrschieber einen wellenförmigen Konturenverlauf aufweist. Der erfindungsgemäße Verlauf des Absperrschiebers weist in Draufsicht einen Konturenverlauf auf, der dem Querschnitt eines tief gezogenen Suppentellers mit Tellerrand ähnelt.

Um eine möglichst scharfe Abtrennung des abgesperrten Verteilerraumes mit den zugehörigen abzusperrenden Verteilerleitungen, deren Eingangsöffnungen kein Saatgut zugeführt werden soll, und dem nicht abgesperrten Bereich des Verteilerraumes lässt sich dadurch erreichen, dass die beiden äußeren Eckbereiche des Schiebers in ebene Flächenelement auslaufen, dass an die ebenen Flächenelemente angelegte Geraden zumindest annähernd den Außenumfang des Querschnittes der Zuführungsleitung streifen und/oder berühren.

Weiterhin hat sich durch Versuche zur Überprüfung der Ausgestaltung für eine gute scharfe Abgrenzung gezeigt, dass vorteilhaft ist, dass die beiden äußeren Eckbereiche des Schiebers in ebene Flächenelemente auslaufen und derart angeordnet sind, dass an die ebenen Flächenelemente angelegte Geraden auf die Zwischenwand zwischen zwei Eintrittsöffnungen der Verteilerleitungen jeweils ausgerichtet sind.

Der erfindungsgemäße Absperrschieber findet bevorzugt Anwendung zur Absperrung der halben Anzahl der am Verteilerkopf angeschlossenen Verteilerleitungen, die Ausbringelementen, wie beispielsweise Säscharen führen.

Weitere Einzelheiten der Erfindung sind der Beispielsbeschreibung und den Zeichnungen zu entnehmen. Hierbei zeigen
- Fig. 1: den Verteilerkopf eines pneumatischen Verteil- und Dosiersystems mit im Halbschnitt dargestellten Verteilerkopfdeckel, wobei der Absperrschieber in seiner Absperrposition sich befindet, in perspektivischer Darstellung,
- Fig. 2: den Verteilerkopf in der Darstellungsweise nach Fig. 1, wobei der Absperrschieber sich in halb eingeschobener Stellung in den Verteilerraum des Verteilerkopfes befindet,
- Fig. 3: den Verteilerkopf in der Darstellung nach Fig. 1, wobei der Absperrschieber sich in der eingezogenen Position befindet,
- Fig. 4: den Verteilerkopf in der Draufsicht mit abgenommenem Verteilerkopfdeckel,
- Fig. 5: einen weiteren Verteilerkopf in der Darstellungsweise nach Fig. 4 mit einer anderen Ausgestaltung des Absperrschiebers,
- Fig. 6: einen weiteren Verteilerkopf eines pneumatischen Verteil- und Dosiersystems mit im Halbschnitt dargestellten Verteilerkopfdeckel, wobei der Absperrschieber sich in seiner Absperrposition befindet, in perspektivischer Darstellung,
- Fig. 7: den Verteilerkopf in der Darstellungsweise nach Fig. 6, in Draufsicht und
- Fig. 8: einen weiteren Verteilerkopf in der Darstellung nach Fig. 7, wobei der Absperrschieber anders ausgestaltet ist.

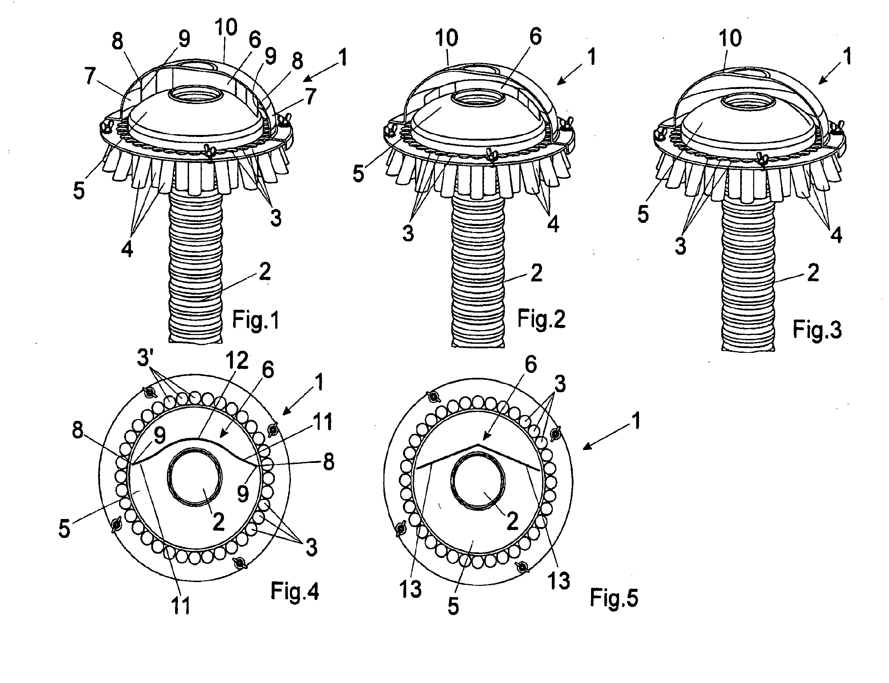

Der in den Fig. 1 bis 4 dargestellte Verteilerkopf 1 ist Bestandteil eines pneumatischen Dosier- und Verteilsystems einer pneumatischen arbeitenden landwirtschaftlichen Verteilmaschine.

Über das Zuführrohr 2, welches mit einem pneumatischen Förderluftstrom, der von einem motorisch angetriebenen Gebläse erzeugt wird, beaufschlagt ist, wird dem am Ende des Zuführrohres 2 angeordneten Verteilerkopf 1 das auszubringende Material, beispielsweise Saatgut oder Dünger in einstellbarer Weise zugeführt. Über den Verteilerkopf 1 wird das Material in bekannter Weise auf die zu einzelnen Ausbringorganen führende Eintrittsöffnungen 3 aufweisenden Verteilerleitungen 4 aufgeteilt.

Der Verteilerraum 5 des Verteilerkopfes 1 ist ringförmig ausgestaltet. Von dem Verteilerkopf 1 aus führen, wie bereits erwähnt, mehrere Zuführleitungen 4, die Eintrittsöffnungen 3 aufweisen, weg.

Dem Verteilerkopf 1 ist ein Absperrschieber 6, der von unten in den Verteilerraum 5 des Verteilerkopfes 1 einschiebbar ist, zugeordnet. Dieser Absperrschieber 6 ist in den Verteilerraum 5 zum Absperren einzuschieben, so dass also einige Eintrittsöffnungen 3 der Verteilerleitungen 4 absperrbar sind, und aus dem Verteilerraum 5 herausbewegbar, so dass das zugeführte Material auf alle Eintrittsöffnungen 3 der Verteilerleitungen 4 in gleichmäßiger Weise aufgeteilt wird.

Der Absperrschieber 6 ist in seiner Absperrstellung entsprechend der Fig. 1 beabstandet zu den Eintrittsöffnungen 3 der Verteilerleitungen 4 und zu den Seitenwandungen 7 des Verteilerraumes 5 angeordnet, so dass die Luft von der Zuführleitung 2 zu den Eintrittsöffnungen 3' der abgesperrten Verteilerleitungen durch den Zwischenraum 8 zwischen den Seitenenden 9 des Absperrschiebers 6 und den benachbarten Seitenwandungen 7 des Verteilerkopfdeckels 10 gelangt, wie Fig. 1 und 4 zeigen.

Der Absperrschieber 6 weist, wie in Fig. 4 erkennbar ist, die Form eines zum ringförmigen Verteilerraum 5 nicht konzentrischen Zylinderabschnittes auf. Hierbei besteht der Absperrschieber 6 aus zwei winklig zueinander angeordneten Flächenelementen 11, die im Übergangsbereich durch einen Zylinderabschnitt 12 miteinander verbunden sind. Der Absperrschieber 6 weist in seinem der Zuführleitung 2 unmittelbar benachbarten Bereich den die beiden Flächenabschnitte 11 miteinander verbindenden kreisförmigen Zylinderabschnitt 12 auf. An den zylinderförmigen Abschnitt 12 schließen sich die nicht kreisförmigen Flächenelemente 11 an, die in annähernd ebene Flächen auslaufen.

Gemäß dem nicht erfindungsgemäßen Beispiel nach Fig. 5 besteht der Absperrschieber 6 aus zwei winklig miteinander verbundenen Flächen 13.

Um eine verbesserte Luftabführung aus dem Verteilerkopf 1 bei in dem Verteilerraum 5 in Absperrstellung eingeschobenen Absperrschieber 6 zu erreichen, besteht der Absperrschieber 6 aus einem luftdurchlässigen Material, so dass er luftdurchlässig ausgebildet ist. Hierbei kann der Absperrschieber 6 aus einem siebartigen Material bestehen. Das siebartige Material ist hierbei ein Sieb, dessen Maschenweite kleiner als der Durchmesser des auszubringenden körnigen Materials ist. Um sich in vorteilhafter Weise an verschiedene auszubringende Materialien anpassen zu können, sind Absperrschieber 6 mit verschieden großen Maschenweiten und verschieden großer Luftdurchlässigkeit vorhanden, die in einfacher Weise gegeneinander ausgetauscht werden können.

Wenn der Absperrschieber 6 aus einem luftdurchlässigen Material besteht, kann entgegen der Ausgestaltung in den Ausführungsbeispielen in den Fig. 1 bis 4 der Absperrschieber 6 auch die abzusperrenden Bereiche des Verteilerraumes völlig vom noch weiter aktiven Verteilerraum absperren. Hierbei ist der Absperrschieber dann bis an die Wandungen des Verteilerraumes 5 und den des Deckels 10 herangeführt.

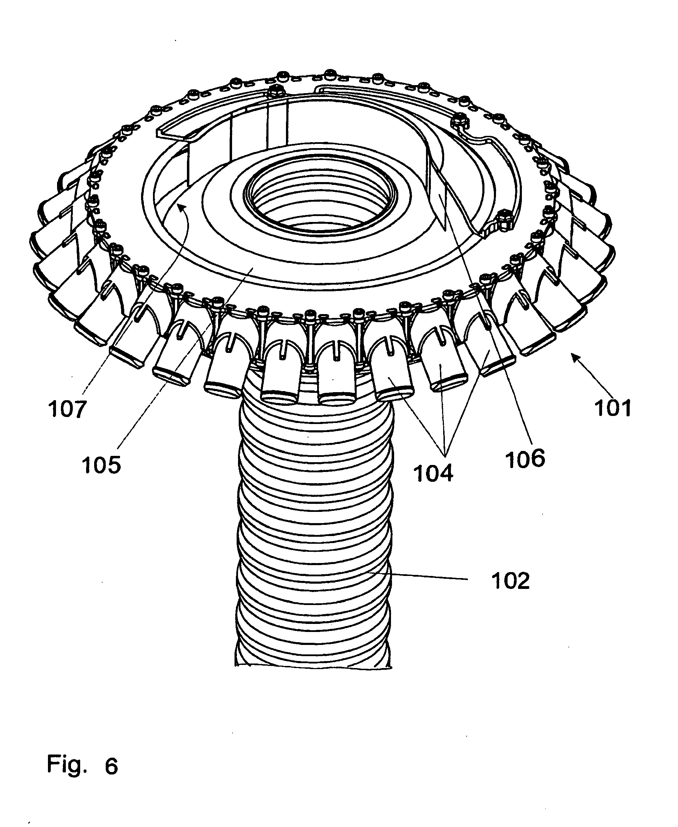

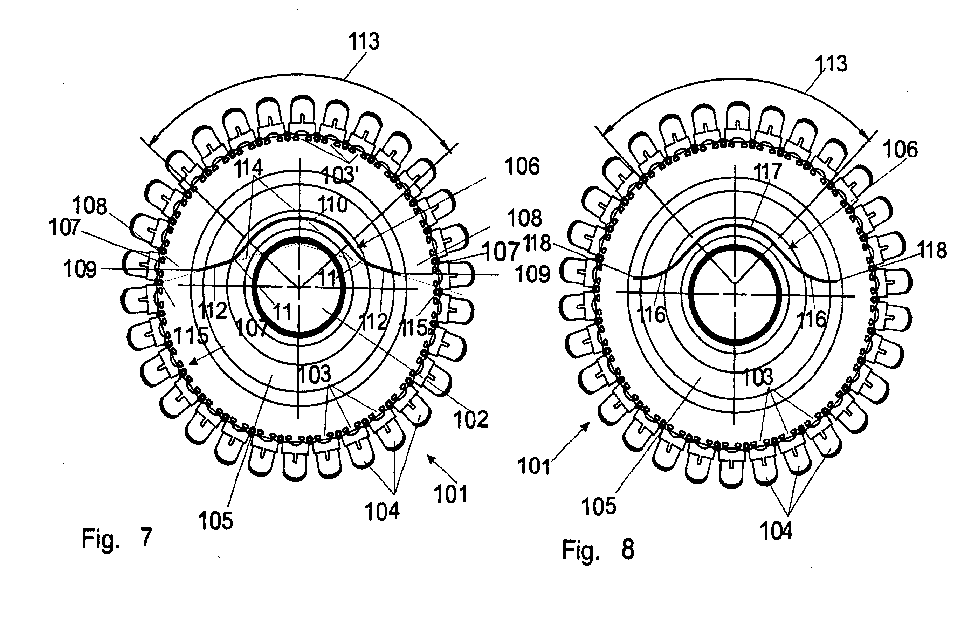

Der in den Fig. 6 und 7
dargestellte Verteilerkopf 101 ist Bestandteil eines pneumatischen Dosier- und Verteilsystems einer pneumatischen arbeitenden landwirtschaftlichen Verteilmaschine.

Über das Zuführrohr 102, welches mit einem pneumatischen Förderluftstrom, der von einem motorisch angetriebenen Gebläse erzeugt wird, beaufschlagt ist, wird dem am Ende des Zuführrohres 102 angeordneten Verteilerkopf 101 das auszubringende Material, beispielsweise Saatgut oder Dünger in einstellbarer Weise zugeführt. Über den Verteilerkopf 101 wird das Material in bekannter Weise auf die zu einzelnen Ausbringorganen führende Eintrittsöffnungen 103 aufweisenden Verteilerleitungen 104 aufgeteilt.

Der Verteilerraum 105 des Verteilerkopfes 101 ist ringförmig ausgestaltet. Von dem Verteilerkopf 101 aus führen, wie bereits erwähnt, mehrere Zuführleitungen 104, die Eintrittsöffnungen 103 aufweisen, weg.

Dem Verteilerkopf 101 ist ein Absperrschieber 106, der von unten in den Verteilerraum 105 des Verteilerkopfes 101 einschiebbar ist, zugeordnet. Dieser Absperrschieber 106 ist in den Verteilerraum 105 zum Absperren einzuschieben, so dass also einige Eintrittsöffnungen 103 der Verteilerleitungen 104 absperrbar sind, und aus dem Verteilerraum 105 herausbewegbar, so dass das zugeführte Material auf alle Eintrittsöffnungen 103 der Verteilerleitungen 104 in gleichmäßiger Weise aufgeteilt wird.

Der Absperrschieber 106 ist in seiner Absperrstellung entsprechend der Fig. 6 beabstandet zu den Eintrittsöffnungen 103 der Verteilerleitungen 104 und zu den Seitenwandungen 107 des Verteilerraumes 105 angeordnet, so dass die Luft von der Zuführleitung 102 zu den Eintrittsöffnungen 103' der abgesperrten Verteilerleitungen durch den Zwischenraum 108 zwischen den Seitenenden 109 des Absperrschiebers 6 und den benachbarten Seitenwandungen 107 des Verteilerkopfes 101 gelangt, wie Fig. 6 und 7 zeigen.

Der Absperrschieber 106 weist, wie in Fig. 7 erkennbar ist, die Form eines zum ringförmigen Verteilerraum 105 nicht konzentrischen Zylinderabschnittes auf. Der Absperrschieber besitzt in seinem der Zuführleitung 102 unmittelbar benachbarten Bereich einen Schieberabschnitt 110, der einen der Kreiskontur der Zuführleitung 102 und des ringförmigen Verteilerraumes 105 ähnlichen und/oder angepassten Krümmungsverlauf aufweist. An diesem mittleren Bereich 110 des Absperrschiebers 106 schließen sich jeweils auf jeder Seite ein eine entgegen gesetzte Krümmung aufweisende Schieberabschnitte 111 an. Diese Abschnitte 111 laufen in gerade Flächen 112 aus.

Der Absperrschieber 106 weist in seinem der Zuführleitung 102 unmittelbar benachbarten Bereich einen zumindest annähernd ringförmigen Zylinderabschnitt 110 auf, der sich über einen Bereich 113 zwischen 70° und 120°, vorzugsweise etwa 90°, im Ausführungsbeispiel gemäß Fig. 7 über 98° erstreckt und zumindest annähernd konzentrisch zu der Kreiskontur der Zuführleitung 102 und des ringförmigen Verteilerraumes verläuft. An diesem mittleren Bereich 110 des Absperrschiebers 106 schließen sich mit zum dem mittleren als Kreisabschnitt ausgebildeten Bereich 110 jeweils auf jeder Seite eine entgegen gesetzte Krümmung aufweisende Schieberabschnitte 111 an, die im Ausführungsbeispiel gemäß Fig. 7 in eine gerade Fläche auslaufen. Der Absperrschieber 106 weist somit einen wellenförmigen Konturenverlauf auf. Weiterhin ist dieser Konturenverlauf so, dass er dem Querschnitt eines tief gezogenen Suppentellers mit Tellerrand ähnelt.

Weiterhin laufen, wie bereits erwähnt, die beiden äußeren Eckbereiche des Schiebers 106 in ebene Flächenelemente 113 aus. An die ebenen Flächenelemente 113 angelegte Geraden 114 streifen und/oder berühren zumindest annähernd den Außenumfang des Querschnittes der Zuführungsleitung 102, wie Fig. 7 zeigt.

Außerdem laufen die äußeren Eckbereiche des Schiebers 106 in ebene Flächenelemente 113 aus und sind derart angeordnet, dass, wie die Fig. 7 zeigt, die an die ebenen Flächenelemente 113 angelegten Geraden 114 auf die Zwischenwand 115 zwischen zwei Eintrittsöffnungen 103 der Verteilerleitungen 104 jeweils ausgerichtet sind. Der Schieber 106 kann mittels nicht dargestellter motorischer Elemente in eine Außerbetriebsposition aus dem Verteilerraum 105 herausgezogen werden, dass er die gleichmäßige Verteilung des über die Zuführleitung 102 dem Verteilerraum 105 pneumatisch zugeführten Saatgutes nicht stört, so dass sich in dem Verteilerraum 105 das Saatgut in gleichmäßiger Weise auf die einzelnen zu den Verteilerleitungen 104 führenden Eintrittsöffnungen 103 aufteilen kann.

Weiterhin kann mittels des motorischen Einstellelementes der Absperrschieber 106 in die in Fig. 6 dargestellte Absperrposition gebracht werden, so dass die Hälfte der Eintrittsöffnungen 103 bzw. die Verteilerleitungen 104 von dem übrigen Verteilerraum abgesperrt werden können.

Der Schieber 106 gemäß Fig. 8 unterscheidet sich von dem Schieber gemäß Fig. 7 dadurch, dass die Abschnitte 116, die sich an dem mittleren Bereich 117 des Absperrschiebers 106 anschließen, nicht in ebene Flächen auslaufen, sondern bis zu ihrem Ende 18 mit einer Krümmung versehen sind.

## Patentansprüche

1. Verteiler für eine pneumatische Verteilmaschine für Saatgut, Dünger und dergleichen mit folgenden Merkmalen:
1.1. einen ringförmigen Verteilerraum definierenden Verteilerkopf (1),
1.2. in den Verteilerkopf (1) mündet mindestens eine Zuführleitung (2, 102)
1.3. an den Verteilerkopf (1) schließen, mit Abstand zu der Zuführleitung (2, 102), Verteilerleitungen (4) an,
1.4. zumindest einen Absperrschieber (6, 106),
1.5. der Absperrschieber (6, 106) ist in den ringförmigen Verteilerraum einschiebbar und aus diesem heraus bewegbar und zwar derart, dass die Seitenenden des Absperrschiebers in seiner Absperrstellung beabstandet zu den Eintrittsöffnungen der Verteilerleitungen (4) und/oder zu den Seitenwandungen des Verteilerraumes angeordnet sind, so dass Luft von der Zuführleitung zu den Eintrittsöffnungen der abgesperrten Verteilerleitungen (4) durch den Raum zwischen den Seitenenden des Absperrschiebers (6, 106) und der benachbarten Seitenwandung des Verteilerraumes gelangt,
wobei der Absperrschieber (6, 106) die Form eines zum ringförmigen Verteilerraum (5) nicht konzentrischen Zylinderabschnittes aufweist;
**dadurch gekennzeichnet, dass**
der Absperrschieber (6, 106) in seinem der Zuführleitung (2, 102) unmittelbar benachbarten Bereich einen Schieberabschnitt (110, 117), der einen der Kreiskontur der Zuführleitung (2, 102) und des ringförmigen Verteilerraumes (105) ähnlichen Krümmungsverlauf aufweist, besitzt, dass sich an diesem mittleren Bereich (110, 117) des Absperrschiebers (6, 106) jeweils auf jeder Seite ein eine entgegensetzte Krümmung aufweisender Schieberabschnitt (111, 112, 116) anschließt.

2. Verteiler nach Anspruch 1, **dadurch gekennzeichnet, dass** der Absperrschieber (6) in seinem der Zuführleitung (2) unmittelbar benachbarten Bereich einen kreisförmigen Zylinderabschnitt (12) aufweist, dass sich an den zylinderförmigen Abschnitt (12) nicht kreisförmige Flächenabschnitte (11) anschließen, die zumindest annähernd in eine ebene Fläche auslaufen.

3. Verteiler nach Anspruch 1, **dadurch gekennzeichnet, dass** der Absperrschieber (6,13) luftdurchlässig ausgebildet ist.

4. Verteiler nach Anspruch 1, **dadurch gekennzeichnet, dass** der Absperrschieber (6,13) aus einem luftdurchlässigen Material besteht.

5. Verteiler nach Anspruch 1, **dadurch gekennzeichnet, dass** der Absperrschieber (6,13) aus siebartigem Material besteht.

6. Verteiler nach Anspruch 5, **dadurch gekennzeichnet, dass** aus siebartigem Material ein Sieb ist, dessen Maschenweite kleiner als das auszubringende körnige Material ist.

7. Verteiler nach Anspruch 3, **dadurch gekennzeichnet, dass** Absperrschieber (6,13) mit verschiedenen großen Maschenweiten und/oder verschieden großer Luftdurchlässigkeit vorhanden und gegeneinander austauschbar sind.

8. Verteiler nach Anspruch 1, **dadurch gekennzeichnet, dass** der Absperrschieber (106) in seinem der Zuführleitung (102) unmittelbar benachbarten Bereich (110, 117) einen zumindest annähernd ringförmigen Zylinderabschnitt, der sich über einen Bereich (1013) zwischen 70° und 120°, vorzugsweise etwa 90° erstreckt und zumindest annähernd konzentrisch zu der Kreiskontur der Zuführleitung (102) des ringförmigen Verteilerraumes (105) verläuft, aufweist, dass sich an diesem mittleren Bereich (110, 117) des Absperrschiebers (106) sich mit zu dem mittleren als Kreisabschnitt ausgebildeten Bereich (110, 117) jeweils auf jeder Seite ein eine entgegensetzte Krümmung aufweisender Schieberabschnitt (111, 112, 116) anschließt.

9. Verteiler nach Anspruch 1, **dadurch gekennzeichnet, dass** der Absperrschieber (106) einen wellenförmigen Konturenverlauf aufweist.

10. Verteiler nach Anspruch 1, **dadurch gekennzeichnet, dass** der Absperrschieber (106) einen Konturenverlauf aufweist, der dem Querschnitt eines tief gezogenen Suppentellers mit Tellerrand ähnelt.

11. Verteiler nach zumindest einem der vorstehenden Ansprüche, **dadurch gekennzeichnet, dass** die beiden äußeren Eckbereiche des Schiebers (106) in ebene Flächenelemente (112) auslaufen, dass an die ebenen Flächenelemente (112) angelegte Geraden (114) zumindest annähernd den Außenumfang des Querschnittes der Zuführungsleitung (102) streifen und/oder berühren.

12. Verteiler nach zumindest einem der vorstehenden Ansprüche, **dadurch gekennzeichnet, dass** die beiden äußeren Eckbereiche des Schiebers (106) in ebene Flächenelemente (112) auslaufen und derart angeordnet sind, dass an die ebenen Flächenelemente (112) angelegte Geraden (114) auf die Zwischenwand (115) zwischen zwei Eintrittsöffnungen (103) der Verteilerleitungen (104) jeweils ausgerichtet sind.

## Claims

1. Distributor for a pneumatic distribution machine for distributing seed, fertilizer and the like, having the following features:
1.1 a distributor head (1), which defines an annular distributor space,
1.2 at least one feed line (2, 102) opens out into the distributor head (1),
1.3 the distributor head is followed, at a distance from the feed line (2, 102), by distributor lines (4),
1.4 at least one gate valve (6, 106),
1.5 the gate valve (6, 106) can be pushed into the annular distributor space and moved out of the same, to be precise such that the side ends of the gate valve, in the shut-off position of the latter, are spaced apart from the inlet openings of the distributor lines (4) and/or from the side walls of the distributor space, and therefore air passes from the feed line to the inlet openings of the shut-off distributor lines (4) through the space between the side ends of the gate valve (6, 106) and the adjacent side wall of the distributor space,
wherein the gate valve (6, 106) is in the form of a cylinder portion which is not concentric with the annular distributor space (5);
**characterized in that**
the gate valve (6, 106), in its region directly adjacent to the feed line (2, 102), has a slide portion (110, 117) which has a curved progression similar to the circular contour of the feed line (2, 102) and of the annular distributor space (105), and **in that** said central region (110, 117) of the gate valve (6, 106) is followed, on either side in each case, by a slide portion (111, 112, 116) which is curved in the opposite direction.

2. Distributor according to Claim 1, **characterized in that** the gate valve (6), in its region directly adjacent to the feed line (2), has a circular cylinder portion (12), and **in that** the cylindrical portion (12) is followed by non-circular surface portions (11) which terminate at least more or less in a planar surface.

3. Distributor according to Claim 1, **characterized in that** the gate valve (6, 13) is of air-permeable design.

4. Distributor according to Claim 1, **characterized in that** the gate valve (6, 13) consists of an air-permeable material.

5. Distributor according to Claim 1, **characterized in that** the gate vale (6, 13) consists of screen-like material.

6. Distributor according to Claim 5, **characterized in that** the screen-like material forms a screen of which the mesh width is smaller than the granular material which is to be discharged.

7. Distributor according to Claim 3, **characterized in that** the gate valve (6, 13) is provided with mesh widths of different sizes and/or air permeabilities of different magnitudes and these can be interchanged.

8. Distributor according to Claim 1, **characterized in that** the gate valve (106), in its region (110, 117) directly adjacent to the feed line (102), has an at least more or less annular cylinder portion which extends over a region (113) between 70° and 120°, preferably approximately 90°, and runs at least more or less concentrically in relation to the circular contour of the feed line (102) of the annular distributor space (105), and **in that** said central region (110, 117) of the gate valve (106) is followed, on either side in each case in relation to the central, circle-portion region (110, 117), by a slide portion (111, 112, 116) which is curved in the opposite direction.

9. Distributor according to Claim 1, **characterized in that** the gate valve (106) has an undulating contour.

10. Distributor according to Claim 1, **characterized in that** the gate valve (106) has a contour which is similar to the cross section of a deep-drawn soup plate with plate periphery.

11. Distributor according to at least one of the preceding claims, **characterized in that** the two outer corner regions of the gate valve (106) terminate in planar surface elements (112), and **in that** straight lines (114) positioned on the planar surface elements (112) at least more or less touch and/or make contact with the outer circumference of the cross section of the feed line (102).

12. Distributor according to at least one of the preceding claims, **characterized in that** the two outer corner regions of the gate valve (106) terminate in planar surface elements (112) and are arranged such that straight lines (114) positioned on the planar surface elements (112) are each aligned with the intermediate wall (115) between two inlet openings (103) of the distributor lines (104).

## Revendications

1. Distributeur pour une machine distributrice pneumatique pour semences, engrais et similaires, présentant les caractéristiques suivantes :
1.1. une tête de distribution (1) définissant un espace de distribution annulaire,
1.2. au moins une conduite d'alimentation (2, 102) débouche dans la tête de distribution (1),
1.3. à la tête de distribution (1) se raccordent, à distance de la conduite d'alimentation (2, 102), des conduites de distribution (4),
1.4. au moins un coulisseau de fermeture (6, 106),
1.5. le coulisseau de fermeture (6, 106) peut être inséré dans l'espace de distribution annulaire et peut être déplacé hors de celui-ci, et ce de telle sorte que les extrémités latérales du coulisseau de fermeture soient, dans sa position de fermeture, disposées à distance des ouvertures d'entrée des conduites de distribution (4) et/ou des parois latérales de l'espace de distribution, de sorte que de l'air provenant de la conduite d'alimentation parvienne jusqu'aux ouvertures d'entrée des conduites de distribution fermées (4), à travers l'espace entre les extrémités latérales du coulisseau de fermeture (6, 106) et la paroi latérale adjacente de l'espace de distribution,
le coulisseau de fermeture (6, 106) présentant la forme d'une portion cylindrique non concentrique à l'espace de distribution annulaire (5) ; **caractérisé en ce que**
le coulisseau de fermeture (6, 106) comprend, dans sa région immédiatement adjacente à la conduite d'alimentation (2, 102), une portion de coulisseau (110, 117) qui présente une allure de courbure similaire au contour circulaire de la conduite d'alimentation (2, 102) et de l'espace de distribution annulaire (105), et **en ce qu'**une portion de coulisseau (111, 112, 116) présentant une courbure opposée se raccorde à chaque fois de chaque côté à cette région centrale (110, 117) du coulisseau de fermeture (6, 106).

2. Distributeur selon la revendication 1, **caractérisé en ce que** le coulisseau de fermeture (6) présente, dans sa région immédiatement adjacente à la conduite d'alimentation (2), une portion cylindrique circulaire (12), et **en ce que** des portions de surface non circulaires (11) se raccordent à la portion cylindrique (12), lesquelles portions de surface se terminent au moins approximativement par une surface plane.

3. Distributeur selon la revendication 1, **caractérisé en ce que** le coulisseau de fermeture (6, 13) est réalisé de manière perméable à l'air.

4. Distributeur selon la revendication 1, **caractérisé en ce que** le coulisseau de fermeture (6, 13) est constitué d'un matériau perméable à l'air.

5. Distributeur selon la revendication 1, **caractérisé en ce que** le coulisseau de fermeture (6, 13) est constitué d'un matériau de type tamis.

6. Distributeur selon la revendication 5, **caractérisé en ce qu'**un tamis est constitué d'un matériau de type tamis, l'ouverture de maille du tamis étant plus petite que le matériau granulaire devant être épandu.

7. Distributeur selon la revendication 3, **caractérisé en ce que** des coulisseaux de fermeture (6, 13) présentant des ouvertures de maille de différentes tailles et/ou des perméabilités à l'air de différentes grandeurs sont disponibles et interchangeables.

8. Distributeur selon la revendication 1, **caractérisé en ce que** le coulisseau de fermeture (106) présente, dans sa région (110, 117) immédiatement adjacente à la conduite d'alimentation (102), une portion cylindrique au moins approximativement annulaire qui s'étend sur une région (113) comprise entre 70° et 120°, de préférence d'environ 90° et qui s'étend au moins approximativement de manière concentrique au contour circulaire de la conduite d'alimentation (102) de l'espace de distribution annulaire (105), et **en ce qu'**une portion de coulisseau (111, 112, 116) présentant une courbure opposée se raccorde à chaque fois de chaque côté, par rapport à la région centrale (110, 117) réalisée sous forme de portion circulaire, à cette région centrale (110, 117) du coulisseau de fermeture (106).

9. Distributeur selon la revendication 1, **caractérisé en ce que** le coulisseau de fermeture (106) présente une allure de contour ondulée.

10. Distributeur selon la revendication 1, **caractérisé en ce que** le coulisseau de fermeture (106) présente une allure de contour qui ressemble à la section transversale d'une assiette à soupe creuse présentant un bord d'assiette.

11. Distributeur selon au moins l'une quelconque des revendications précédentes, **caractérisé en ce que** les deux régions de coin extérieures du coulisseau (106) se terminent par des éléments de surface plans (112), et **en ce que** des droites (114) tracées sur les éléments de surface plans (112) effleurent et/ou viennent en contact au moins approximativement avec la périphérie extérieure de la section transversale de la conduite d'alimentation (102).

12. Distributeur selon au moins l'une quelconque des revendications précédentes, **caractérisé en ce que** les deux régions de coin extérieures du coulisseau (106) se terminent par des éléments de surface plans (112) et sont disposées de telle sorte que des droites (114) tracées sur les éléments de surface plans (112) soient à chaque fois orientées vers la paroi intermédiaire (115) entre deux ouvertures d'entrée (103) des conduites de distribution (104).
